# EUROPEAN PATENT APPLICATION

(11) **EP 4 804 043 A1**
(43) Date of publication of application: **09.09.2026**
(21) Application number: 25300018.6
(22) Date of filing: 05.03.2025
(51) Int. Cl.: G06F 13/38, G06F 13/40, H04L 45/60, H04L 49/101, H04L 49/109, H04L 49/15, G06F 11/30, G06F 15/173, G06F 12/0813, G06F 15/78

(54) **MULTI-CHANNEL ROUTER FOR AN INTEGRATED-CIRCUIT INTERCONNECT**

(71) Applicant: ARM Limited, Cambridgeshire CB1 9NJ (GB)
(72) Inventor: Le, Hien, Austin, TX 78735 (US); Werkheiser, Mark David, Austin, TX 78735 (US); Jain, Rishabh, Austin, TX 78735 (US); Mccreary, Harrison MinHo, Austin, TX 78735 (US); Kaseridis, Dimitrios, Austin, TX 78735 (US)
(74) Representative: Dehns

(57) **Abstract**

An integrated-circuit apparatus (101) comprises a network of multi-channel routers (104; 301), each multi-channel router comprising one or more ingress network ports (306) and one or more egress network ports (306) for exchanging flits with one or more further multi-channel routers of the network. A multi-channel router (301) of the network comprises a plurality of upload device ports (302), each upload device port configured to receive upload flits from a respective device of the system, and a plurality of download device ports (302a), each configured to send download flits to a respective device of the system. The multi-channel router (301) further comprises a plurality of channel modules (304) configured to route flits from the upload device ports (302) and ingress network ports (306) to the download device ports (302a) and egress network ports (306). It is configured such that each of the channel modules (304) can receive flits from any ingress network port (306) associated with a respective channel of the plurality of channels and from only a respective subset of the upload device ports (302), particular to the respective channel module, and can selectively route flits to any egress network port (306) associated with the respective channel and to any of the plurality of download device ports (302a).

## Description

### TECHNICAL FIELD

The present disclosure relates to a multi-channel router for an integrated-circuit interconnect.

### BACKGROUND

Integrated-circuit data processing systems, such as a system-on-chip (SoC), can include multiple components coupled by an interconnect as nodes of a network. Such components can include processing devices, storage devices and input-output devices. Processing devices may include central processing units (CPUs), CPU clusters, graphics processing units (GPUs), GPU clusters and other accelerators. Storage and input-output devices may include memory, memory controllers, input-output interfaces, bridges, etc.

Such an interconnect may comprise a plurality of coupled routers, e.g. arranged as a polygonal mesh, such as a rectangular mesh. The routers direct flits (i.e. packets) between the components of the network-i.e. from a source node to a target node.

A router may have a plurality of upload device ports (DPs) for receiving incoming flits over a plurality of respective links, and a plurality of download device ports (DPs) for sending outgoing flits over a plurality of respective links. The incoming and outgoing links may be the same set of bidirectional links.

Interconnect routers may support multiple channels for independently routing multiple flows (i.e. different groups or types of flit) through the interconnect. However, this additional complexity can lead to wiring congestion within the routers, which can be undesirable in the design stage and during operation.

### SUMMARY

Disclosed herein is an integrated-circuit apparatus comprising a network of multi-channel routers, each multi-channel router comprising one or more ingress network ports and one or more egress network ports for exchanging flits with one or more further multi-channel routers of the network, wherein a multi-channel router of the network comprises a plurality of upload device ports, wherein each upload device port is configured to receive upload flits from a respective device of the integrated-circuit data processing system. The multi-channel router further comprises a plurality of download device ports, wherein each download device port is configured to send download flits to a respective device of the integrated-circuit data processing system. The multi-channel router further comprises a plurality of channel modules configured to route flits from the upload device ports and ingress network ports to the download device ports and egress network ports. The router may be configured such that each of the channel modules can receive flits from any ingress network port associated with a respective channel of the plurality of channels and from only a respective subset of the upload device ports, particular to the respective channel module, and can selectively route flits to any egress network port associated with the respective channel and to any of the plurality of download device ports.

Also disclosed is an integrated-circuit apparatus comprising a network of multi-channel routers, each multi-channel router comprising one or more ingress network ports and one or more egress network ports for exchanging flits with one or more further multi-channel routers of the network, wherein a multi-channel router of the network comprises a plurality of upload device ports, wherein each upload device port is configured to receive upload flits from a respective device of the integrated-circuit data processing system. The multi-channel router further comprises a plurality of download device ports, wherein each download device port is configured to send download flits to a respective device of the integrated-circuit data processing system. The multi-channel router further comprises a plurality of channel modules configured to route flits from the upload device ports and ingress network ports to the download device ports and egress network ports. The router may be configured such that each of the channel modules can receive flits from any ingress network port associated with a respective channel of the plurality of channels and from any of the upload device ports, and can selectively route flits to any egress network port associated with the respective channel and to only a respective subset of the download device ports, particular to the respective channel module.

Also disclosed is a method of routing flits in an integrated-circuit apparatus, wherein the integrated-circuit apparatus is an integrated-circuit apparatus as disclosed herein. The method comprises receiving a flit at an upload device port or an ingress network port of a multi-channel router of the integrated-circuit apparatus; and outputting the flit from a download device port or an egress network port of the multi-channel router.

### BRIEF DESCRIPTION OF THE DRAWINGS

Certain embodiments of the invention will now be described, by way of example only, with reference to the accompanying drawings, in which:
Fig. 1 is a schematic diagram of part of an integrated-circuit data processing system embodying the present disclosure;
Fig. 2 is a schematic diagram of a mesh network embodying the present disclosure;
Fig. 3 is a schematic diagram of a first router embodying the present disclosure;
Fig. 4 is a schematic diagram of a different router exhibiting wiring congestion;
Fig. 5 is a schematic diagram of a second router embodying the present disclosure;
Fig. 6 is a schematic diagram of a third router embodying the present disclosure;
Fig. 7 is a flow chart of a method embodying the present disclosure.

### DETAILED DESCRIPTION

Some embodiments provide an integrated-circuit (IC) apparatus comprising a network of multi-channel routers, each multi-channel router comprising one or more ingress network ports and one or more egress network ports, for exchanging flits with one or more further multi-channel routers of the network, wherein a multi-channel router of the network comprises:
a plurality of upload device ports, wherein each upload device port is configured to receive upload flits from a respective device of the integrated-circuit data processing system;
a plurality of download device ports, wherein each download device port is configured to send download flits to (i.e. route them along a path towards) a respective device of the integrated-circuit data processing system; and
a plurality of channel modules configured to route flits from the upload device ports and ingress network ports to the download device ports and egress network ports,
wherein the router is configured such that each of the channel modules can receive flits from any ingress network port associated with a respective channel of the plurality of channels and from only a respective subset of the upload device ports, particular to the respective channel module, and can selectively route flits to any egress network port associated with the respective channel and to any of the plurality of download device ports.

The subsets of the upload device ports may be non-overlapping subsets. The subsets may be a partition of the plurality of upload device ports, which may be all the upload device ports of the router.

The multi-channel router may comprise a plurality of bus systems, each configured to receive flits from all of the channel modules and to deliver the flits to all of a respective subset of the download device ports. Each subset of the download device ports may be particular to the respective bus system. Each of the channel modules may be configured to selectively route flits to any one of the bus systems. The bus systems may be multidrop bus systems.

The multi-channel router may comprise a number, K, of bus systems and a same number, K, of subsets of the download device ports. The subsets of the download device ports may be non-overlapping subsets. Each subset may contain an equal number of download device ports. Each of the channel modules of the multi-channel router may comprise a plurality of multiplexers, wherein each multiplexer is configured to multiplex flits from the respective subset of the upload device ports onto a respective bus system of the plurality of bus systems.

In some embodiments, each of the channel modules of the multi-channel router comprises a plurality of multiplexers, wherein each multiplexer is configured to multiplex flits from the respective subset of the upload device ports to a respective one of the plurality of download device ports.

Each of the download device ports of the multi-channel router may be configured to filter flits, received by the download device port from a channel module, that are not addressed to a respective device connected to the download device port.

The plurality of download device ports may be the same as, or distinct from, the plurality of upload device ports. In some embodiments, each device port of the plurality of download device ports of the multi-channel router is also a device port of the plurality of upload device ports of the multi-channel router. Each may be a bidirectional device port. The one or more egress network ports may be the same as, or distinct from, the one or more ingress network ports. In some embodiments, each network port of the plurality of ingress network ports of the multi-channel router is also a network port of the plurality of egress network ports of the multi-channel router. Each may be a bidirectional network port.

The multi-channel routers of the network may be coupled as a polygonal (e.g. rectangular or L-shaped) mesh network. The network may be two-dimensional or three-dimensional.

Some embodiments provide an integrated-circuit apparatus comprising a network of multi-channel routers, each multi-channel router comprising a plurality of ingress and egress network ports for exchanging flits with one or more further multi-channel routers of the network, wherein a multi-channel router of the network comprises:
a plurality of upload device ports, wherein each upload device port is configured to receive upload flits from a respective device of the integrated-circuit data processing system;
a plurality of download device ports, wherein each download device port is configured to send download flits to a respective device of the integrated-circuit data processing system; and
a plurality of channel modules configured to route flits from the upload device ports and ingress network ports to the download device ports and egress network ports,
wherein the router is configured such that each of the channel modules can receive flits from any ingress network port associated with a respective channel of the plurality of channels and from any of the upload device ports, and can selectively route flits to any egress network port associated with the respective channel and to only a

respective subset of the download device ports, particular to the respective channel module.

The integrated-circuit apparatus may be configured to send flits received at any of the upload device ports to all of the channel modules.

Each of the channel modules may be configured to filter flits, received by the channel module from an upload device port, that are not addressed to a device or router connected to a download device port to which the channel module can route flits.

A non-transitory computer-readable medium may store computer-readable code for fabrication of any integrated-circuit apparatus or portion thereof as disclosed herein.

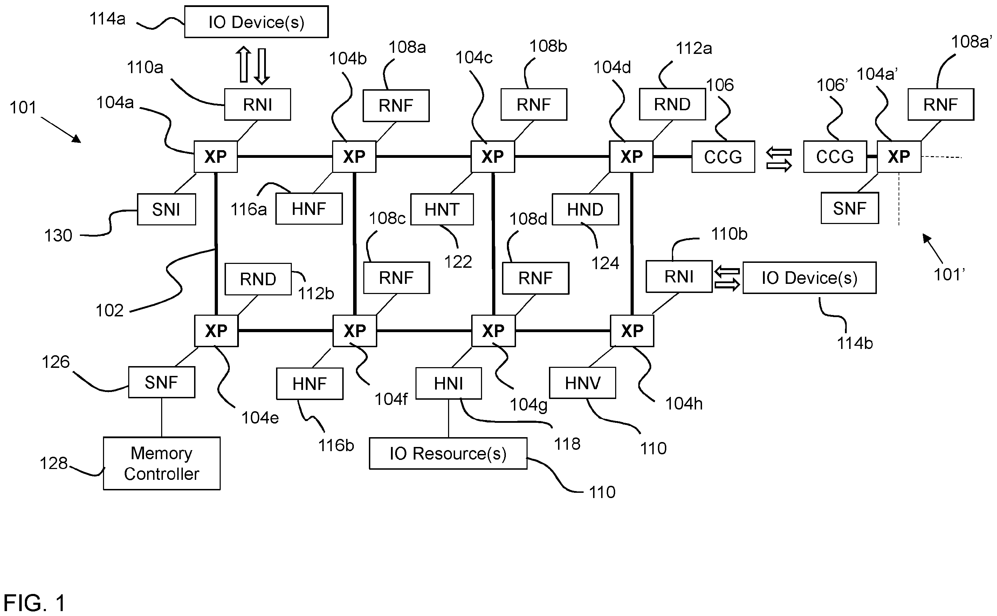

Fig. 1 shows part of an exemplary integrated-circuit data-processing system 101 (e.g. a system-on-chip). The system 101 includes an interconnect 102 comprising a rectangular array of set of routers 104, here labelled as cross-points (XP), coupled by physical channel links. The links provide horizontal (X-axis) and vertical (Y-axis) connections between adjacent XPs 104. The rectangular layout is a logical layout and is not necessarily reflected in the physical placement of the routers and other components on the integrated circuit, although it may be in some embodiments.

The integrated circuit data processing system 101 includes a plurality of nodes. The nodes are coupled together by the interconnect 102, thus forming a connection between the functional blocks which the nodes provide. The interconnect 102 provides signal connections between the nodes and may have various topologies. The interconnect 102 in Fig. 1 has a rectangular mesh topology, but in other variants it may be configured to form a mesh network, a ring network, a cross-bar network, or other network. The interconnect provides a number of cross-points (XPs) 104a-104h. Each cross-point 104a-104h provides one more device ports for coupling to nodes (e.g. to request nodes and home nodes as described below) and one or more ingress and egress network ports which couple to other respective cross-points. A network port may be bidirectional and provide both an ingress port and an egress port, or the ingress network ports and egress network ports may be distinct from each other. A device port may be bidirectional and provide both an upload device port and a download device port, or the upload device ports and download device ports may be distinct from each other.

Each router 104 is a multi-channel router. In some examples, flits transmitted through the interconnect 4 are able to be sent on four or more channels provided by the interconnect 102 - e.g. a Request Channel (REQ), a Response Channel (RESP), a Data Channel (DAT), and a Snoop Channel (SNP). Each of these (or only some, e.g. RESP and DAT) may be duplicated in order to provide separate channels for transmit (TX) and receive (RX). The REQ channel is used for sending read and write requests, cache maintenance requests, and Distributed Virtual Memory (DVM) requests. The RESP channel is used to send completion responses for various types of messages, ranging from write and cache management responses to data-less snoop responses and operation completion acknowledgments. The SNP channel issues snoops and sends DVM operations. The DAT channel is used to send write and read data, and snoop responses which include data.

Protocol messages are sent in the form of a flit. Flits are a packetized collection of control fields and identifiers that communicate a protocol message.

Some of the control fields sent in a flit include opcodes, memory attributes, address, data, and error responses. Each channel may use different flit control fields. For example, a flit to read or write on the Request channel uses an Address field, and a flit on the Data channel uses the Data and Byte Enable fields. The fields in a flit may be sent in parallel (i.e. not serialized over multiple packets).

There are three categories of node which may be present in the integrated circuit data processing system 101 - these are Request Nodes (RNs), Home Nodes (HNs) and subordinate nodes (SNs). Each of these is described further below.

Chip-to-chip gateways (CCGs) can couple between a network on one chip or chiplet (i.e. one integrated circuit data processing system 101) and a similar network on another chip or chiplet (i.e. a second integrated circuit data processing system 101'). This enables formation of a network spanning multiple chips or c. Two example chip-to-chip gateways 106, 106' belonging respectively to the first and second integrated circuit data processing systems 101, 101' are shown in Fig. 1, connecting an XP 104d of the first integrated circuit data processing system 101 to an XP 104a' of a second integrated circuit data processing system 101'. Only a small part of the second integrated circuit data processing system 101' is shown.

In this example, CCG nodes 106, 106' include both a request agent (RA), for issuing requests and receiving snoops, and a home agent (HA), for receiving requests and issuing snoops.

The role of request nodes is to generate transactions, such as read and write requests, in order to access and process data. These transactions are sent to Home Nodes (HNs).

There are several different varieties of request node, each of which is described by a corresponding term - a Fully Coherent Request Node (RNF), an input/output (I/O) Coherent Request Node (RNI), and an I/O Coherent RN with Distributed Virtual Memory (DVM) support (RND). A request node may be, for example, a central processing unit (CPU) core, a neural engine or other accelerator, or a Component Aggregation Layer that houses two or more CPU cores to be connected to one network port.

A Fully Coherent Request Node (RNF) contains coherent caches and will accept and respond to snoop messages for accessing or changing the coherency state of cached data. It will be understood that coherency refers to ensuring that all processors in the system see the same view of memory, meaning that changes to data held in the cache of one core are visible to the other cores, making it impossible for cores to see stale copies of data (the old data from before it was changed by the first core).

An I/O-Coherent Request Node (RNI) does not have a coherent cache, and cannot accept snoop messages. An I/O-Coherent Request Node with DVM support (RND) has the same functionality as an RNI and can also accept DVM messages. Example RNFs 108a-108d, 108a', RNIs 110a, 110b, and RNDs 112a, 112b, are illustrated in the integrated circuit data processing system 101 of Fig. 1. As illustrated, the RNIs are connected to one or more IO devices 114a, 114b. Although not illustrated, it will be understood that the RNDs 112a, 112b, may also be connected to one or more IO devices.

Home Nodes (HNs) receive transactions from Request Nodes (RNs), and are responsible for ordering these requests, generating transactions to SNs (discussed below) and in some cases issuing snoops and handling DVM operations.

There are two main types of home node - fully coherent Home Nodes (HNFs), which order all requests to coherent memory and issue snoops to RN-Fs, and non-coherent Home Nodes (HNIs) which order requests that target an I/O subsystem. Both types act as a point of serialization.

The integrated circuit data processing system 101 includes a system level cache (SLC) which may reduce the number of accesses to memory and reduce the latency of data accesses. The system level cache may be distributed across a large set of home nodes in a network to share the cache capacity over all network nodes across multiple chips, in particular across the fully coherent home nodes (HNFs). The portion of a system level cache (SLC) present at a particular HNF may be referred to as a system cache group (SCG). A fully coherent home node (HNF) provides a point of coherency for a subset of system addresses and provides a cache for storing data associated with the addresses. Coherency may be provided by a snoop filter (SF) that tracks data copied to caches in the network caches. HNFs may thus comprise a system cache group (part of the system level cache) and a snoop filter. Thus, HNFs control coherency among data stored by the data processing system. Two example HNFs 116a, 116b are shown in Fig. 1, along with an example HNI 118, which is connected to one or more I/O resources 110.

There are further types of home node which are variations of the HNIs having additional functionality compared to an HNI - these include HNVs, HNTs, and HNDs. An HNV is an HNI which further includes a distributed virtual memory (DVM) node. An HNT is an HNI further including the functionality of both a DVM node and also a Debug Trace Controller (DTC). An HND is HNI further including the functionality of a DVM node, a DTC, and a configuration subordinate (which is a subordinate interface for configuration register space access). Fig. 1 shows an example HNV 110, HNT 122 and HND 124.

A distributed virtual memory (DVM) node, also referred to as a DN, controls its own respective DVM domain, such that each RNF sends its DVM requests to the DN in its own domain. DVM requests are messages that request a DVM operation in order to support maintenance of the virtual memory system. The DN propagates snoops and receives corresponding responses, based on the received DVM request.

Subordinate nodes (SNs) provide access to data sources and sinks, such as memory and peripheral devices. A memory or peripheral device may be located off-chip or on-chip (i.e. as part of the integrated circuit data processing system 101, or separate from it).

There are two types of subordinate node: fully coherent subordinate nodes (SNFs) which connect to memory devices that back the coherent memory space, and non-coherent subordinate nodes (SNIs) which connect to I/O peripherals or non-coherent memory. Fig. 1 shows an example SNF 126, connected to a memory controller 128, and an example SNI 130, which may be connected to non-coherent memory or an I/O peripheral.

Every component in the system is assigned a Unique Node ID. The system may then use a System Address Map (SAM) to convert physical addresses to Node IDs. These may be used by the XPs 104 for routing flits through the network. To be able to determine the target Node ID of outgoing requests, each RN and HN has a corresponding system address map.

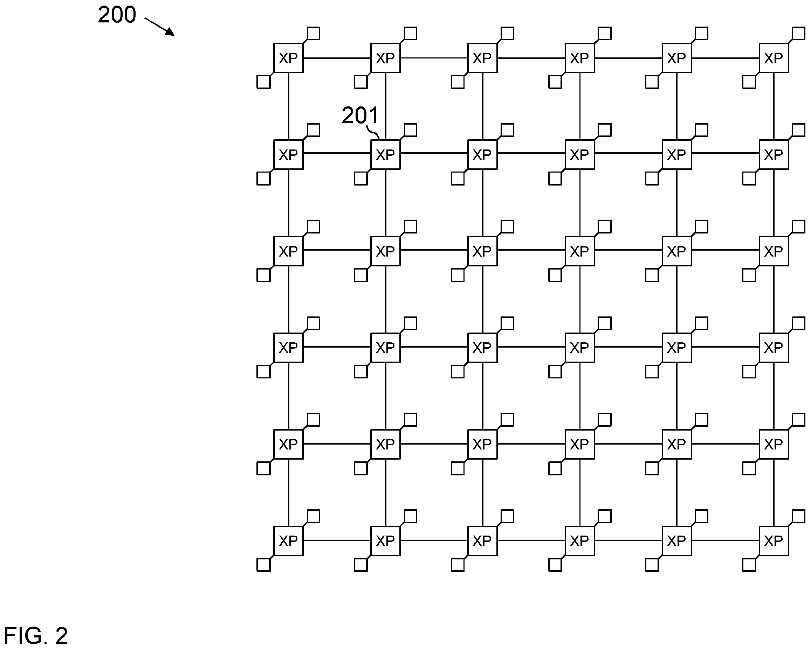

Fig. 2 shows part of another exemplary integrated-circuit rectangular mesh network 200. In this example, the interconnect comprises a 6x6 array of routers (XPs) 201. In this embodiment, each XP 201 has up to four bidirectional network ports (i.e. supporting both ingress and egress) for communicating with one or more adjacent XPs of a two-dimensional mesh, as well as two device ports for communicating with up to two device nodes. However, in other embodiments, a network may have more or fewer XPs than this, and each XP may have any number of device ports or network ports. The interconnect need not necessarily be rectangular-it could be linear, L-shaped, hexagonal, three-dimensional, cuboid, etc.

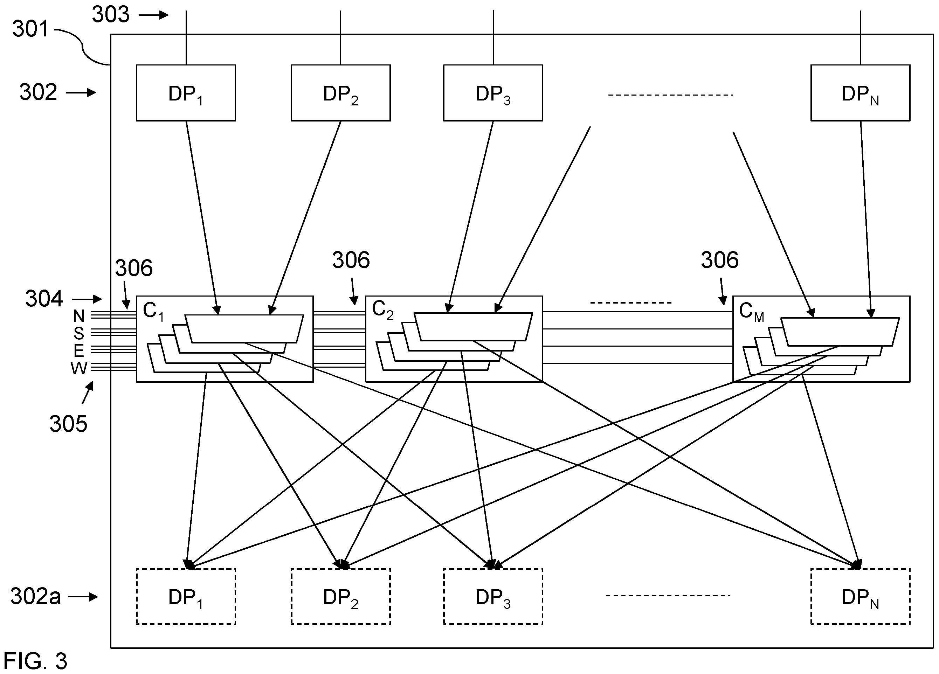

Fig. 3 shows an exemplary router 301 that may be used within a rectangular interconnect such as the interconnect of the mesh networks 102, 200 shown in Figs. 1 or 2, or with other interconnects.

The router 301 comprises a set of N device ports 302, DP₁,...,DP_{N}, each of which can be coupled to a respective device (e.g. a CPU, a coherent cache, or a memory controller) by a respective bidirectional link 303. Each link 303 may comprise a number of electrical lines. Since, in this example, these device ports are bidirectional, the set of N device ports 302 is also shown duplicated at the bottom of Fig. 3, labelled 302a, for illustrative convenience; however, these are the exact same device ports as in the set 302. In other examples, a router may have a set of unidirectional download device ports (for outputting flits to a device from the router) that are separate from a set of unidirectional upload device ports (for receiving flits from a device into the router).

The router 301 is an M-channel router and comprises a set of M channel modules 304, C₁,...,C_{M}, containing switching logic for routing flits (i.e. packets) as M independent flows. In some examples, different groups or types of flit may travel on different channels. The router 301 can receive flits at any device port 302 or any of a set of bidirectional network ports 306 coupled to mesh links 305. It can output flits from a device port 302 or network port 306. The switching logic can include arbiters and multiplexers for routing a flit towards its intended destination, e.g. based on an identifier of a target device/node encoded within a flit.

Each channel module 304 is coupled to its own distinct set of up to four mesh links 305 for communicating with neighbouring routers. This mesh communication can thus occur over M distinct channels, each managed by a respective one of the channel modules 304 in each router 301, independently of the other channel modules 304. These four sets of mesh links 305 are labelled N for north (i.e. up the Y axis), S for south (i.e. down the Y axis), E for east (i.e. rightwards on the X axis) and W (i.e. leftwards on the X axis). For networks having different layouts (e.g. three-dimensional networks), there may be more or fewer mesh connections.

Routers located at the edges or corners of the mesh may lack one or more of these links and/or some of the associated switching logic from this general design. These may be automatically optimised out from a common router design during the design stage. Additionally, any unused device ports may be optimised away, resulting in some of the routers 301 having fewer than M device ports.

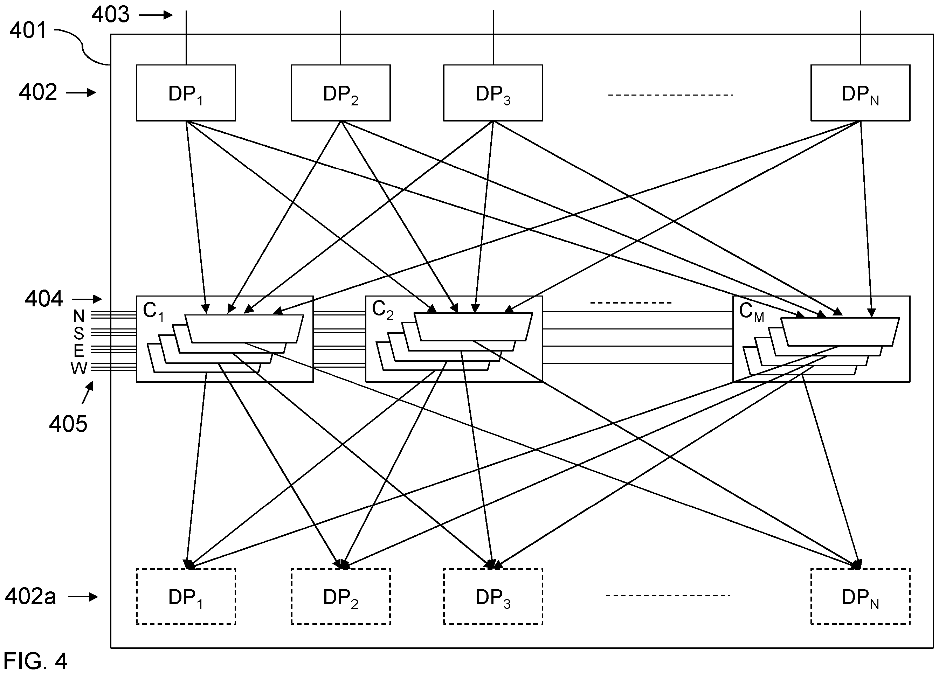

Before describing the design and operation of the router 301 in detail, consider first the exemplary router 401 in Fig. 4, which is provided as an example of a router that exhibits undesirable wiring congestion, by way of contrast with the embodiment of Fig. 3.

The router 401 similarly has N device ports 402, 402a with links 403 to respective device nodes, as well as M sets of mesh links 405. However, in contrast with the router 301 of Fig. 3, each of the M channel modules 404 in the router 401 contains N+4 multiplexers: N multiplexers that output to the N respective device ports (a representative four of these multiplexers are depicted in Fig. 4), plus four multiplexers that output to the four mesh links 405 (not shown in Fig. 4 for simplicity). Each multiplexer has N+4 inputs for receiving flits from any selectable one of the N upload DPs and the four mesh links 405 (i.e. from the north, south, east and west connections to neighbouring routers). The multiplexer is controlled by an arbiter, which may appropriate priority decision logic such as least-recently-granted arbitration. In Fig. 4, for simplicity, only the N device-port inputs are shown.

Each of the multiplexers 404 can route received flits from a selected input to a respective fixed one of the N download DPs 402a or four mesh links 405. Routing logic within a channel module 404 can select which of the multiplexers to activate, depending on where a flit is destined.

In this way, each channel module C₁, ..., C_{M} 404 can, independently of the other channel modules, route flits, from any one of the N upload DPs and four network ports, to any one of the four network ports or N download DPs.

This arrangement is highly flexible, but suffers wiring congestion, which worsens with the number of ports N, and with the number of channels M. For larger values of N and/or M, the design may become practicably un-routable. Moreover, the larger fan-out and increasing physical distances may impose an unacceptable limit on maximum frequency, and the logic may have high static and dynamic power demands.

By contrast, the router 301 shown in Fig. 3 does not suffer the same level of wiring congestion. Similarly to the router 401, it has a set 302 of N bidirectional device ports, DP₁,...,DP_{N}, acting both as upload device ports and download device ports, as well as M channel modules, C₁,...,C_{M}. However, instead of every upload device port 302 being coupled to every channel module 304, each upload device port 302 is coupled to only a respective one of the channel modules 304. In this way, each channel module 304 receives flits from a distinct set of upload DPs 302 (in this example, from a pair of DPs) particular to that channel module 304.

Each of the M channel modules 304 again contains N+4 multiplexers, each of which is arranged to output flits to a fixed respective one of the N download DPs 302a and four mesh links 305. In this way, each channel module C₁, ..., C_{M} 304 can, independently of the other channel modules, route flits, from a selectable one of the four network ports 305 and the two upload DPs 302 that are particularly coupled to that channel module, to a fixed respective one of the download DPs 302a or network ports 305. By selecting which multiplexer to activate, a channel module 304 can select to which of the outputs to route a flit.

In the example shown in Fig. 3, M = N/2, and each channel module 304 is fed by a particular pair of upload DPs 302. However, in other embodiments, M might not equal N/2, and a different assignment may be used. This may provide an even or uneven distribution of the upload DPs 302 across the channel modules.

Assigning each upload DP 302 to a respective one of the channel modules 304, rather than being coupled to every channel module, simplifies the wiring on the upload side within the router 301. Compared with the router 404 in Fig. 4, it can have fewer input buffers, fewer multiplexers and less arbitration logic, thereby saving area, and yet can potentially provide higher upload bandwidth by reducing the likelihood of upload contention at a channel module 304. It offers better upload traffic isolation between devices connected to the same channel module. It also facilitates further reductions in upload contention when combined with intelligent placement of device nodes during the design stage of the mesh network as a whole.

This arrangement can still enable any device of the network to communicate with any other device of the network, albeit not across every channel.

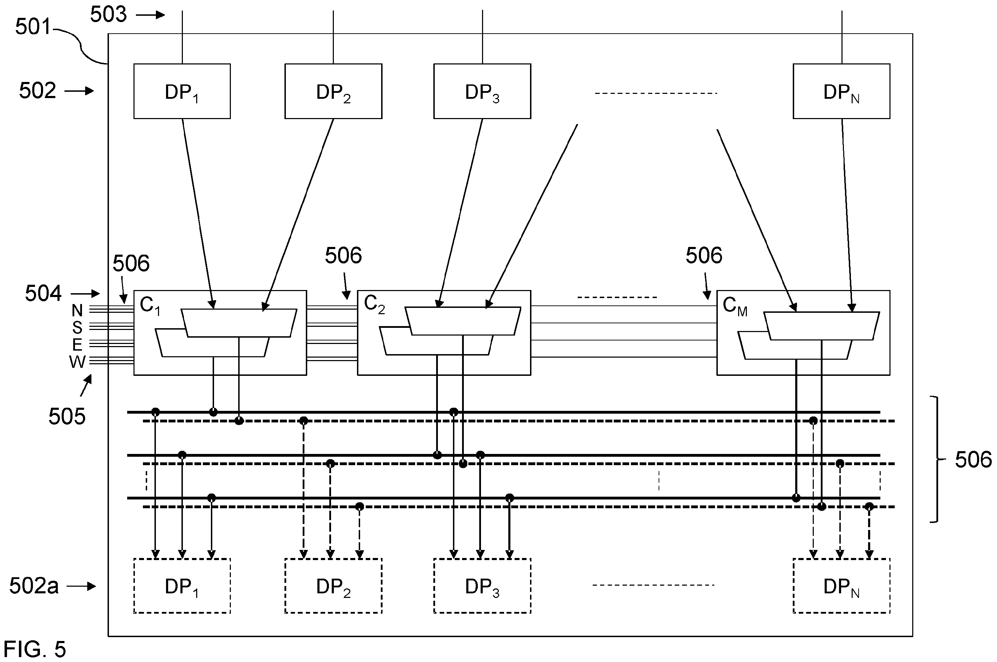

The router 301 in Fig. 3 has significant benefits over the router 401 in Fig. 4. However, still further improvements may be realised by additionally changing the download wiring, as shown in the example router 501 in Fig. 5.

Fig. 5 shows a router 501 that has M device ports 502, 502a, coupled to M devices by a set of device links 503, and M channel modules 504 each having a set of four bidirectional network ports 506 coupled to respective mesh links 505. Similarly to Fig. 3, each channel module 504 receives upload flits only from a pair of upload DPs 502 particular (i.e. uniquely assigned) to that module 504. However, in this embodiment, on the download side, each of the M channel modules 504 is connected to a particular respective output bus system of a set of M output bus systems 506. In this way, each of these output bus systems is specific to one of the channels.

Each output bus system is a multidrop bus system-i.e. it can deliver flits to multiple download DPs 502a. Each channel output bus system comprises a respective pair of bus links (shown respectively as a solid line and a dashed line in Fig. 5), with the first bus link of the pair having drops to half of the N download DPs 502a and with the second bus link of the pair having drops to the other half of the N download DPs 502a.

Each of the M channel modules 504 contains six multiplexers (two DP-output multiplexers, depicted in Fig. 5, and four mesh-output multiplexers, not shown), each of which has six inputs (two DP inputs and four mesh inputs) and one output. In Fig. 5, for simplicity, only the two DP multiplexers of each channel module 504 are shown, as well as only the two DP inputs to each multiplexer. Within each channel module 504, each of the two DP-output multiplexers is arranged to output received flits to a fixed respective one of the two bus links of the output bus systems for that channel module 504. Dividing the pairs of upload DPs between the two bus links (e.g. having odd numbered DPs on one bus link and even numbered DPs on the other) allows the DPs to be split evenly. However, in other embodiments, the DPs could be allocated differently between the parallel busses.

In this way, each DP-output multiplexer in the channel modules 504 outputs to N/2 of the download DPs 502a simultaneously. This is different from the routers 301, 401 above, which output to a single selected download DP. However, each of the download DPs 502a contains a destination-based filter which collectively filter out all but one copy of each flit dropped to the DPs 502a from the output bus systems, such that only the DP coupled to the device for which the flit is destined will pass the flit out of its link 503. In some implementations, the filtering may make use of a short "valid" flag for each of the devices directly coupled to the router 503. Although, in the present embodiment, a flit has only one destination, other embodiments could support multicast or broadcast flits; in this case, the filters may be configured such that multiple filters pass a multicast or broadcast flit.

Upon receiving a flit, a channel module 504 will use a destination of the flit to determine which multiplexer to activate, depending on whether the flit is to go out over a mesh link 505 or to be downloaded to one of the DPs 502a. In case it is for a DP 502a, the channel module 504 will determine which of the two sets of DPs 502a the destination is coupled to, and activate the corresponding multiplexer.

Although the example in Fig. 5 divides the download DPs 502a into two equal sets, other embodiments may divide the download ports into unequal sets and/or into a larger number of sets, with a corresponding increase in bus links within each channel bus system.

This use of multidrop output buses still provides full connectivity, but with a potential for reduced area, power, wiring congestion, and fanout. It may enable more flexible routing.

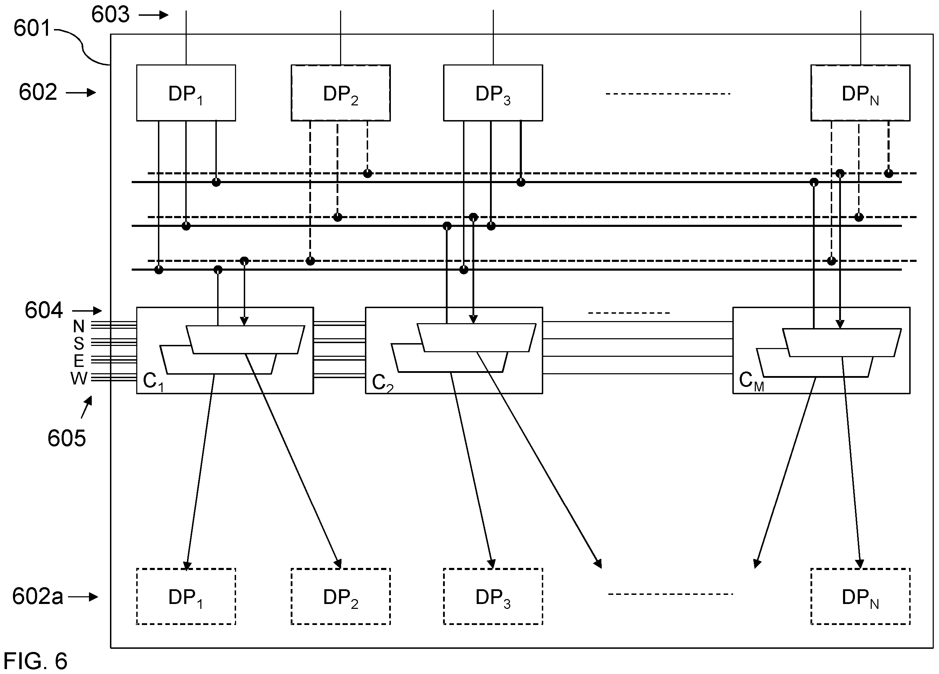

Fig. 6 shows a further embodiment in the form of a router 601 which can be seen as inverting the architecture of the router 501 of Fig. 5. The router 601 has a set of M bus systems on the upload side of a set of M channel modules 604, with each channel module 604 containing six multiplexers. Each bus system is specific to a particular channel module 604 and has a pair of bus links for receiving flits from a respective half of N upload DPs 602. Each multiplexer is arranged to receive flits from a respective fixed one of the pair of channel bus links or four mesh links 605 of a channel module 604, and to output flits to a specific respective download DP 602a or mesh link 605.

Thus, the router 601 restricts each download DP 602a to receive flits from a single channel module 604, thereby providing uncongested wiring on the download side. The use of such a set of bus systems on the upload side may also be beneficial, e.g. for reasons similar to the buses in Fig. 5. This design of router 601 may require additional logic within the router 601 and/or source devices, compared with the routers 301 & 501, in order to route flits accurately-e.g. to enable a source device to determine a specific channel module 604 within the router 601 to receive a flit in order for it to reach an intended destination device. Nevertheless, simplifying the wiring on the download side, more than the upload side, may be desirable in some situations.

The use of the bus systems on the upload side is not necessarily essential in this design, and further embodiments that are variants of the router 601 may have a fan-out of fully-connected links on the upload side of the routers, similar to the fan-out on the upload side of the router 401 of Fig. 4.

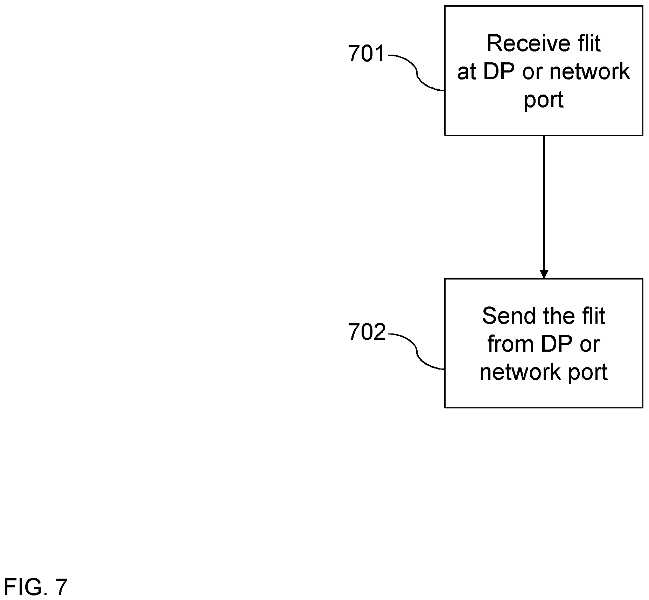

Fig. 7 shows a general method that may be performed by any of the multi-channel routers 301, 501, 601 disclosed herein. In a first step 701, a flit is received at an upload device port or an ingress network port of the multi-channel router, and switching logic within the router determines the appropriate multiplexer control signals for routing the flit towards its destination. In a second step 702, the flit is output from the appropriate download device port or egress network port of the multi-channel router.

At least some of the embodiments described herein provide a router design for an interconnect that scales well, with reduced wiring congestion and/or enabling better physical placement of devices based on channel binding and/or having a smaller area and/or lower power envelope, while still maintaining full connectivity between all source-target device pairs. Some embodiments may provide simpler and/or more predictable bandwidth distribution, and may reduce contention for shared channels on uploads and/or facilitate better upload-traffic isolation by intelligent device port binding, compared with a router design with full upload and download fan-outs, e.g. as shown in Fig. 4.

Various embodiments described herein are implemented using dedicated hardware, configurable hardware or programmed processors executing programming instructions that are broadly described in flow chart form that can be stored on any suitable electronic storage medium or transmitted over any suitable electronic communication medium. A combination of these elements may be used. Those skilled in the art will appreciate that the processes and mechanisms described above can be implemented in any number of variations without departing from the present disclosure. For example, the order of certain operations carried out can often be varied, additional operations can be added, or operations can be deleted, without departing from the present disclosure. Such variations are contemplated and considered equivalent.

The various representative embodiments, which have been described in detail herein, have been presented by way of example and not by way of limitation. It will be understood by those skilled in the art that various changes may be made in the form and details of the described embodiments resulting in equivalent embodiments that remain within the scope of the appended claims.

Concepts described herein may be embodied in computer-readable code for fabrication of an apparatus that embodies the described concepts. For example, the computer-readable code can be used at one or more stages of a semiconductor design and fabrication process, including an electronic design automation (EDA) stage, to fabricate an integrated circuit comprising the apparatus embodying the concepts. The above computer-readable code may additionally or alternatively enable the definition, modelling, simulation, verification and/or testing of an apparatus embodying the concepts described herein.

For example, the computer-readable code for fabrication of an apparatus embodying the concepts described herein can be embodied in code defining a hardware description language (HDL) representation of the concepts. For example, the code may define a register-transfer-level (RTL) abstraction of one or more logic circuits for defining an apparatus embodying the concepts. The code may define an HDL representation of the one or more logic circuits embodying the apparatus in Verilog, SystemVerilog, Chisel, or VHDL (Very High-Speed Integrated Circuit Hardware Description Language) as well as intermediate representations such as FIRRTL. Computer-readable code may provide definitions embodying the concept using system-level modelling languages such as SystemC and SystemVerilog or other behavioural representations of the concepts that can be interpreted by a computer to enable simulation, functional and/or formal verification, and testing of the concepts.

Additionally or alternatively, the computer-readable code may define a low-level description of integrated circuit components that embody concepts described herein, such as one or more netlists or integrated circuit layout definitions, including representations such as GDSII. The one or more netlists or other computer-readable representation of integrated circuit components may be generated by applying one or more logic synthesis processes to an RTL representation to generate definitions for use in fabrication of an apparatus embodying the invention. Alternatively or additionally, the one or more logic synthesis processes can generate from the computer-readable code a bitstream to be loaded into a field programmable gate array (FPGA) to configure the FPGA to embody the described concepts. The FPGA may be deployed for the purposes of verification and test of the concepts prior to fabrication in an integrated circuit or the FPGA may be deployed in a product directly.

The computer-readable code may comprise a mix of code representations for fabrication of an apparatus, for example including a mix of one or more of an RTL representation, a netlist representation, or another computer-readable definition to be used in a semiconductor design and fabrication process to fabricate an apparatus embodying the invention. Alternatively or additionally, the concept may be defined in a combination of a computer-readable definition to be used in a semiconductor design and fabrication process to fabricate an apparatus and computer-readable code defining instructions which are to be executed by the defined apparatus once fabricated.

Such computer-readable code can be disposed in any known transitory computer-readable medium (such as wired or wireless transmission of code over a network) or non-transitory computer-readable medium such as semiconductor, magnetic disk, or optical disc. An integrated circuit fabricated using the computer-readable code may comprise components such as one or more of a central processing unit, graphics processing unit, neural processing unit, digital signal processor or other components that individually or collectively embody the concept.

It will be appreciated by those skilled in the art that the disclosure has been illustrated by describing one or more specific embodiments thereof, but is not limited to these embodiments; many variations and modifications are possible within the scope of the accompanying claims.

## Claims

1. An integrated-circuit apparatus comprising a network of multi-channel routers, each multi-channel router comprising one or more ingress network ports and one or more egress network ports for exchanging flits with one or more further multi-channel routers of the network, wherein a multi-channel router of the network comprises:
a plurality of upload device ports, wherein each upload device port is configured to receive upload flits from a respective device of the integrated-circuit data processing system;
a plurality of download device ports, wherein each download device port is configured to send download flits to a respective device of the integrated-circuit data processing system; and
a plurality of channel modules configured to route flits from the upload device ports and network ports to the download device ports and network ports,
wherein the router is configured such that each of the channel modules can receive flits from any ingress network port associated with a respective channel of the plurality of channels and from only a respective subset of the upload device ports, particular to the respective channel module, and can selectively route flits to any egress network port associated with the respective channel and to any of the plurality of download device ports.

2. The integrated-circuit apparatus of claim 1, wherein the subsets of the upload device ports are non-overlapping subsets.

3. The integrated-circuit apparatus of claim 1 or 2, wherein the multi-channel router comprises a plurality of bus systems, each configured to receive flits from all of the channel modules and to deliver the flits to all of a respective subset of the download device ports, each subset of the download device ports being particular to the respective bus system, wherein each of the channel modules is configured to selectively route flits to any one of the bus systems.

4. The integrated-circuit apparatus of claim 3, wherein the multi-channel router comprises a number of bus systems and a same number of subsets of the download device ports, wherein the subsets of the download device ports are non-overlapping subsets and each subset contains an equal number of download device ports.

5. The integrated-circuit apparatus of claim 3 or 4, wherein each of the channel modules of the multi-channel router comprises a plurality of multiplexers, wherein each multiplexer is configured to multiplex flits from the respective subset of the upload device ports onto a respective bus system of the plurality of bus systems.

6. The integrated-circuit apparatus of any preceding claim, wherein each of the channel modules of the multi-channel router comprises a plurality of multiplexers, wherein each multiplexer is configured to multiplex flits from the respective subset of the upload device ports to a respective one of the plurality of download device ports.

7. The integrated-circuit apparatus of any preceding claim, wherein each of the download device ports of the multi-channel router is configured to filter flits, received by the download device port from a channel module, that are not addressed to a respective device connected to the download device port.

8. An integrated-circuit apparatus comprising a network of multi-channel routers, each multi-channel router comprising one or more ingress network ports and one or more egress network ports for exchanging flits with one or more further multi-channel routers of the network, wherein a multi-channel router of the network comprises:
a plurality of upload device ports, wherein each upload device port is configured to receive upload flits from a respective device of the integrated-circuit data processing system;
a plurality of download device ports, wherein each download device port is configured to send download flits to a respective device of the integrated-circuit data processing system; and
a plurality of channel modules configured to route flits from the upload device ports and network ports to the download device ports and network ports,
wherein the router is configured such that each of the channel modules can receive flits from any ingress network port associated with a respective channel of the plurality of channels and from any of the upload device ports, and can selectively route flits to any egress network port associated with the respective channel and to only a respective subset of the download device ports, particular to the respective channel module.

9. The integrated-circuit apparatus of claim 9, wherein the subsets of the download device ports are non-overlapping subsets.

10. The integrated-circuit apparatus of claim 8 or 9, configured to send flits received at any of the upload device ports to all of the channel modules.

11. The integrated-circuit apparatus of any one of claims 8 to 10, wherein each of the channel modules is configured to filter flits, received by the channel module from an upload device port, that are not addressed to a device or router connected to a download device port to which the channel module can route flits.

12. The integrated-circuit apparatus of any preceding claim, wherein each device port of the plurality of download device ports of the multi-channel router is also a device port of the plurality of upload device ports of the multi-channel router, and wherein each network port of the plurality of egress network ports of the multi-channel router is also a network port of the plurality of ingress network ports of the multi-channel router.

13. The integrated-circuit apparatus of any preceding claim, wherein the multi-channel routers of the network are coupled as a polygonal mesh network.

14. A non-transitory computer-readable medium storing computer-readable code for fabrication of an integrated-circuit apparatus according to any preceding claim.

15. A method of routing flits in an integrated-circuit apparatus, wherein the integrated-circuit apparatus is an integrated-circuit apparatus of any one of claims 1 to 13, and wherein the method comprises:
receiving a flit at an upload device port or an ingress network port of a multi-channel router of the integrated-circuit apparatus; and
sending the flit from a download device port or an egress network port of the multi-channel router.
